# EUROPEAN PATENT APPLICATION

(11) **EP 2 456 212 A2**
(43) Date of publication of application: **23.05.2012**
(21) Application number: 11188813.7
(22) Date of filing: 11.11.2011
(51) Int. Cl.: H04N 13/00

(54) **Stereoscopic display apparatus and method**

(30) Priority: 22.11.2010 JP 2010260073
(71) Applicant: Sony Corporation, Tokyo 108-0075 (JP)
(72) Inventor: Takahashi, Shuichi, Minato-ku, Tokyo 108-0075 (JP); Komoriya, Yota, Minato-ku, Tokyo 108-0075 (JP)
(74) Representative: Lewis, Darren John

(57) **Abstract**

A stereoscopic display apparatus includes a display mode control unit configured to switch the display unit between a first stereoscopic display mode configured for a viewer to view images with stereoscopic viewing glasses and a second stereoscopic display mode configured for a viewer to view images without stereoscopic viewing glasses. Also described is a method of displaying images that includes switching between displaying images in a first stereoscopic display mode in which images are displayed to be viewed with stereoscopic viewing glasses and a second stereoscopic display mode in which images are displayed to be viewed without stereoscopic viewing glasses.

## Description

The present disclosure relates to a stereoscopic display apparatus and a method for stereoscopic display based on a glasses scheme and a glasses-free scheme.

Methods of performing stereoscopic display include a glasses scheme in which an observer uses special glasses for stereoscopic viewing and a glasses-free scheme in which the observer does not use glasses and can stereoscopically view with the naked eye. The glasses scheme includes a polarization glasses scheme and a shutter glasses scheme. According to the shutter glasses scheme, shutter glasses including a left eye shutter and a right eye shutter are used, and the left and right disparity images are separated in a time division manner. JP-A-2010-154533 discloses a method of automatically switching between three-dimensional display and two-dimensional display in a stereoscopic image display apparatus based on the glasses scheme in accordance with whether or not a user has put on stereoscopic glasses.

On the other hand, representative examples of the glasses-free scheme include a parallax barrier scheme and a lenticular lens scheme. In the cases of the parallax barrier scheme and the lenticular lens scheme, stereoscopic viewing is performed by spatially dividing and displaying stereoscopic disparity image (right eye disparity image and left eye disparity image in the case of two viewpoints) on a two-dimensional display panel and performing disparity separation on the disparity image in the horizontal direction by a disparity separation unit (parallax element). In the case of the parallax barrier scheme, a parallax barrier with a slit-shaped opening is used as the disparity separation unit. In the case of the lenticular scheme, a lenticular lens in which plural cylindrical division lenses are arranged in parallel is used as the disparity separation unit.

Although there are various stereoscopic display methods as described above, the stereoscopic display is basically performed based on only one scheme in the related art. However, since the stereoscopic display properties are different in the glasses scheme and the glasses-free scheme, for example, it is convenient that the user can select the glasses scheme or the glasses-free scheme in accordance with the user's preference or the watching environment (the size of audience, the watching location, and the like) . In the case of the glasses scheme, for example, the position of the viewpoint has a certain degree of freedom, and a stereoscopic video image with less crosstalk can be watched, while viewpoint switching is not performed among multiple viewpoints since a stereoscopic display using two-viewpoint images for the left eye and the right eye is performed. In addition, it is bothersome to put on the glasses. In the case of the glasses-free scheme, it is not necessary to put on glasses, and it is possible to perform viewpoint switching among multiple viewpoints by displaying multi view images. According to the glasses-free scheme, however, the viewpoint position is limited as compared with the glasses scheme due to the influence of pseudoscopic viewing and the visual distance. Moreover, according to the glasses-free scheme, the binocular disparity is suppressed in order to suppress the crosstalk, which results in a stereoscopic display with less sense of depth than that in the glasses scheme.

Thus, it is desirable to provide a stereoscopic display apparatus and a method in which plural stereoscopic display modes can be switched between.

Various respective aspects and features of the invention are defined in the appended claims. Combinations of features from the dependent claims may be combined with features of the independent claims as appropriate and not merely as explicitly set out in the claims.

Some embodiments relate to a stereoscopic display apparatus that includes a display mode control unit configured to switch the display unit between a first stereoscopic display mode configured for a viewer to view images with stereoscopic viewing glasses and a second stereoscopic display mode configured for a viewer to view images without stereoscopic viewing glasses.

Some embodiments relate to a method of displaying images that includes switching between displaying images in a first stereoscopic display mode in which images are displayed to be viewed with stereoscopic viewing glasses and a second stereoscopic display mode in which images are displayed to be viewed without stereoscopic viewing glasses.

The forgoing summary is provided to illustrate various aspects of at least one embodiment, and is not intended to be limiting.

Embodiments of the invention will now be described with reference to the accompanying drawings, throughout which like parts are referred to by like references, and in which:
Fig. 1 is a block diagram showing an overall configuration example of a stereoscopic display apparatus according to an embodiment of the present disclosure;
Fig. 2A is a configuration diagram schematically showing a state in which stereoscopic display is performed in a glasses-free mode in the stereoscopic display apparatus shown in Fig. 1, and Fig. 2B is a configuration diagram schematically showing a state in which stereoscopic display is performed in a glasses mode in the stereoscopic display apparatus shown in Fig. 1;
Fig. 3 is a flowchart showing an example of control operations when putting on of shutter glasses is detected in the stereoscopic display apparatus shown in Fig. 1;
Fig. 4 is a flowchart showing an example of control operations when removal of shutter glasses is detected in the stereoscopic display apparatus shown in Fig. 1;
Fig. 5 is a flowchart showing an example of switching control between a glasses mode and a glasses-free mode when the number of users is one; and
Fig. 6 is a flowchart showing an example of switching control between a glasses mode and a glasses-free mode when the number of the users is two or more.

Hereinafter, detailed description will be made of the embodiments of the present disclosure with reference to the drawings.

### [Overall Configuration of Stereoscopic Display Apparatus]

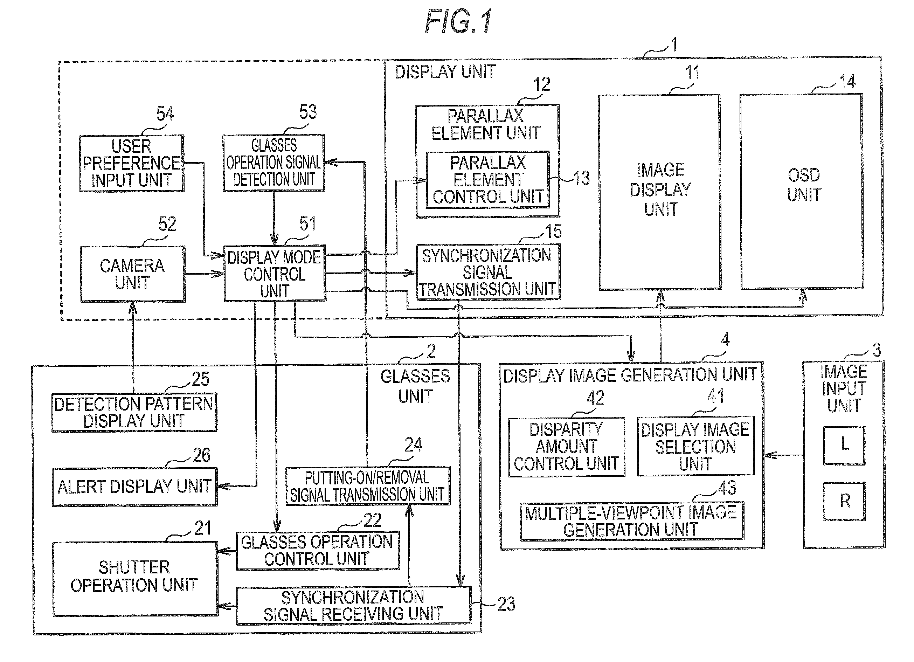

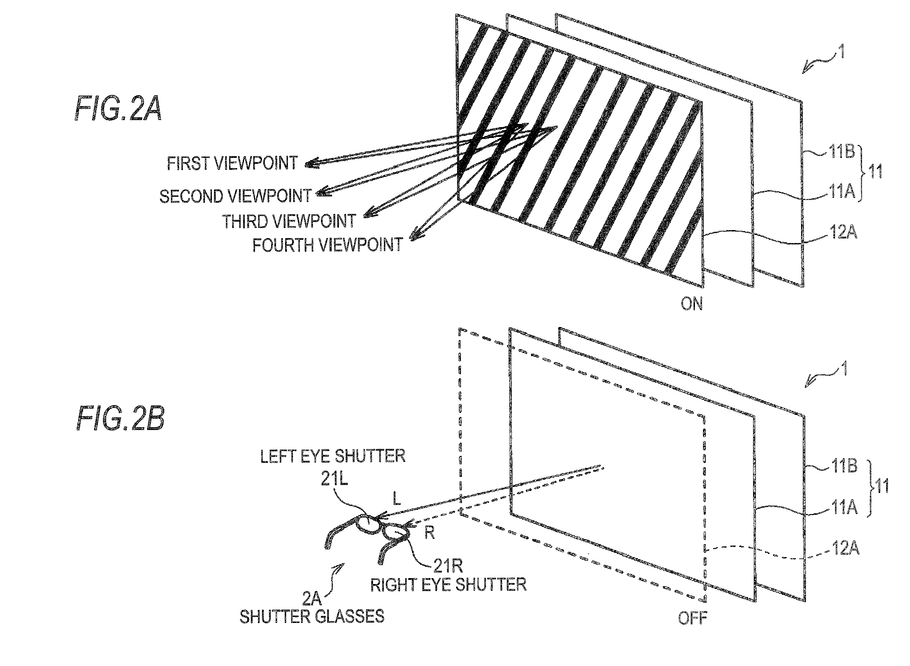

Figs. 1, 2A, and 2B show one configuration example of the stereoscopic display apparatus according to an embodiment of the present disclosure. As shown in Figs. 2A and 2B, this stereoscopic display apparatus includes an image display unit 11, a variable parallax element 12A arranged so as to face the image display unit 11, and shutter glasses 2A. According to this stereoscopic display apparatus, stereoscopic display is possible in two stereoscopic display modes including a glasses-free mode (the second mode, Fig. 2A) for the stereoscopic display with the use of a disparity separation function by the variable parallax element 12A and a glasses mode (the first mode. Fig. 2B) for the stereoscopic display with the use of the disparity separation function by the stereoscopic glasses (the shutter glasses 2A). In addition, it is also possible to operate the stereoscopic display apparatus in a 2D display mode (the third mode) for the ordinary 2D (two-dimensional) display instead of the stereoscopic display by turning off the disparity separation function by the variable parallax element 12A and displaying an ordinary two-dimensional image without any disparity on the image display unit 11.

In the variable parallax element 12A, the disparity separation function is controlled so as to be variable between the on state and the off state. One example of the variable parallax element 12A is a variable parallax barrier which controls the disparity separation function so as to be variable between the on state and the off state by performing variable control on the barrier pattern including an opening unit (a slit unit) and a blocking unit with the use of a liquid crystal display element, for example. It is also applicable to use a variable lenticular lens, which controls the disparity separation function so as to be variable between the on state and the off state by controlling the lens effect so as to be variable between the on state and the off state with the use of a liquid crystal lens, for example, as the variable parallax element 12A.

The image display unit 11 is a display for two- dimensional display, which includes a display panel 11A made of a liquid crystal display panel or the like and a backlight 11B which irradiates the display panel 11A from its rear surface with illumination light. However, a display panel based on an electric luminance scheme or a light-emitting display with no backlight 11B such as a plasma display or the like may be used as the image display unit 11. Plural pixels are arranged in a two-dimensional manner in the horizontal and vertical directions on the image display unit 11.

In the glasses-free mode, disparity images for plural viewpoints (disparity images of the left and right two viewpoints or a disparity synthesis image in which disparity images of multiple viewpoints are synthesized in one screen) are displayed on the image display unit 11. That is, plural disparity images are displayed while spatially divided. In the glasses-free mode, the disparity separation function of the variable parallax element 12A is turned on, and the disparity separation is performed on the disparity synthesis image in plural viewpoint directions by the variable parallax element 12A. With such an operation, it is possible to realize stereoscopic viewing since only specific disparity images are respectively incident to the left and right eyes when observation is made by a user with the naked eye from a predetermined region (a region of normal vision). In addition, Fig. 2A shows an example in which disparity separation has been made in first to fourth different directions by the variable parallax element 12A.

In the glasses mode, disparity images of the left and right two viewpoints (the left eye disparity image and the right eye disparity image) are alternately displayed in a time division manner on the image display unit 11. In the glasses mode, the disparity separation function of the variable parallax element 12A is turned off, and the display image of the image display unit 11 is transmitted through the variable parallax element 12A as it is. The shutter glasses 2A include a left eye shutter 21L and a right eye shutter 21R, which are opened and closed in a mutually independent manner. The left eye shutter 21L and the right eye shutter 21R are configured to be controlled such that the shutter is opened and closed in synchronization with the cycle of the time division display of the left eye disparity image and the right eye disparity image displayed on the image display unit 11. With such a configuration, it is possible to realize stereoscopic viewing in the glasses mode by a state in which only the left eye disparity image and only the right eye disparity image are respectively incident in the left eye and the right eye of the user (observer) through the shutter glasses 2A.

### [Configuration of Control System in Stereoscopic Display Apparatus]

This stereoscopic display apparatus includes a display unit 1, a glasses unit 2, an image input unit 3, a display image generation unit 4, a display mode control unit 51, a camera unit 52, a glasses operation signal detection unit 53, and a user preference input unit 54 as shown in Fig. 1. The display mode control unit 51, the camera unit 52, the glasses operation signal detection unit 53, and the user preference input unit 54 may be provided in the display unit 1. Although not shown in the drawing, the display unit 1 is provided with an audio output unit. In addition, the glasses unit 2 may be provided with the audio output unit.

The display unit 1 includes an image display unit 11, a parallax element unit 12, an OSD unit 14, and a synchronization signal transmission unit 15. The parallax element unit 12 includes a parallax element control unit 13. The glasses unit 2 includes a shutter operation unit 21, a glasses operation control unit 22, a synchronization signal receiving unit 23, a putting-on/removal detection signal transmission unit 24, a detection pattern display unit 25, and an alert display unit 26. The display image generation unit 4 includes a display image selection unit 41, a disparity amount control unit 42, and a multiple viewpoint image generation unit 43.

The image input unit 3 supplies image data for stereoscopic display (the left eye disparity image L and the right eye disparity image R, for example). The display image generation unit 4 generates display image data to be displayed on the image display unit 11 based on the image data supplied from the image input unit 3 and outputs the generated display image data to the image display unit 11. The display image generation unit 4 generates display image data in accordance with the display mode based on the instruction from the display mode control unit 51. In addition, the display image generation unit 4 generates and outputs two-dimensional image data with no disparity, if necessary. The disparity amount control unit 42 controls the disparity amount between plural disparity images when plural disparity images are output to the image display unit 11. The multiple-viewpoint image generation unit 43 generates disparity images of multiple viewpoints from the left eye disparity image L and the right eye disparity image R, for example and generates a disparity synthesis image for the glasses-free mode. The display image selection unit 41 selects an appropriate disparity image in accordance with the display mode and outputs the selected disparity image to the image display unit 11 as the display image data. The display image selection unit 41 outputs disparity image data of two left and right viewpoints to the image display unit 11 as the display image data in the glasses mode, for example. The display image selection unit 41 outputs the disparity synthesis image data including multiple-viewpoint disparity images generated by the multiple-disparity image generation unit 43 to the image display unit 11 as the display image data in the glasses-free mode, for example.

The parallax element control unit 13 turns on and off the disparity separation function of the variable parallax element 12A (Fig. 2A) in accordance with the display mode based on the instruction from the display mode control unit 51. The synchronization signal transmission unit 15 transmits a synchronization signal for opening and closing the shutter glasses 2A in accordance with the display mode based on the instruction from the display mode control unit 51 to the synchronization signal receiving unit 23 of the glasses unit 2. The OSD unit 14 performs OSD (On-Screen Display) on the image display unit 11 . The OSD unit 14 performs message display for notifying a user of the current display mode. For example, when the user is not in the region of normal vision during the display in the glasses-free mode, the user is notified of the fact that the user is not in the region of normal vision, or a message for encouraging the user to move to the region of normal vision is sent.

The shutter operation unit 21 is a shutter unit (the left eye shutter 21L and the right eye shutter 21R) in the shutter glasses 2A. The glasses operation control unit 22 controls shutter operation of the shutter glasses 2A in accordance with the display mode based on the instruction from the display mode control unit 51. The synchronization signal receiving unit 23 receives the synchronization signal from the synchronization signal transmission unit 15 in the display unit 1 and outputs the synchronization signal to the shutter operation unit 21. The synchronization signal receiving unit 23 notifies the putting-on/removal signal transmission unit 24 of whether or not the synchronization has been established between the shutter glasses 2A and the display unit 1. The putting-on/removal signal transmission unit 24 notifies the glasses operation signal detection unit 53 of whether or not the synchronization has been established between the shutter glasses 2A and the display unit 1. The putting-on/removal signal transmission unit 24 also notifies the glasses operation signal detection unit 53 of the power on/off state of the shutter glasses 2A, for example. The alert display unit 26 directly displays message display for notifying the user of the current display mode on the shutter glasses 2A.

The detection pattern display unit 25 displays a mark with which the putting on/removal (wearing) of the shutter glasses 2A by the user, the user's watching position, and the like can be detected by the camera unit 52. The detection pattern display unit 25 performs display with the use of light emitting colors or blinking patterns of an LED (Light Emitting Diode), for example. In addition, it is also applicable to provide a special marker such as a fluorescent marker or the like on the surface of the shutter glasses 2A as the detection pattern display unit 25. Moreover, it is also applicable to provide an LED or the like which shows the power on/off state of the shutter glasses 2A as the detection pattern display unit 25. The LED or the like which shows putting on/removal (wearing) of the shutter glasses 2A and the power on/off state is preferably provided at a position which confronts the display unit 1 when the user has put on the shutter glasses 2A and views the display unit 1.

The camera unit 52 detects the putting on/removal of the shutter glasses 2A by the user, the size of audience, the watching position (viewpoint position) of the user, and the like in the image analysis by image capturing of the camera and notifies the display mode control unit 51 of the detection result. As the size of audience, both the number of the users who have put on the shutter glasses 2A and the number of the users who have not put on the shutter glasses 2A are detected. It is possible to detect whether or not the user has put on the shutter glasses 2A by analyzing the display of the detection pattern display unit 25 in the glasses unit 2 or the shapes or the like of the shutter glasses 2A, for example. In addition, the detection can be made by analyzing the positional relationship between the shutter glasses 2A and each part of the user's face. For example, the detection can be made by analyzing the superimposed relationship between the shutter glasses 2A and the eye pupils or the positional relationship with the nose or the mouth. The camera unit 52 also detects whether the user is in the region of normal vision in which the user can perform normal stereoscopic viewing in the glasses-free mode during the display in the glasses-free mode.

The glasses operation signal detection unit 53 detects the operation state of the shutter glasses 2A by the notification from the putting-on/removal signal transmission unit 24 and notifies the display mode control unit 51 of the detection result. More specifically, the glasses operation signal detection unit 53 detects whether or not the synchronization has been established between the shutter glasses 2A and the display unit 1 and the power on/off state of the shutter glasses 2A.

The user preference input unit 54 receives the user's selection of the display mode and is configured by a remote controller, for example. The user can manually instruct the switching of the display mode according to their own preference by operating the user preference input unit 54.

The display mode control unit 51 determines in which display mode the stereoscopic display is performed from among the glasses mode and the glasses-free mode and controls the shutter glasses 2A, the image display unit 11 , and the variable parallax element 12A to be in the operation state in accordance with the display mode by controlling the display image generation unit 4, the parallax element control unit 13, the OSD unit 14, the synchronization signal transmission unit 15, the glasses operation control unit 22, and the alert display unit 26 to be in the state suitable for the display mode. The display mode control unit 51 also controls each part so as to be in the state suitable for the ordinary 2D display mode (the third mode), if necessary.

The display mode control unit 51 switches the display mode to be selected for the stereoscopic display in accordance with the putting on/removal of the shutter glasses 2A by the user. The display mode control unit 51 also switches the display mode in accordance with the putting on/removal of the shutter glasses 2A by the user and the number of the users. For example, when there are users who have put on the shutter glasses 2A and users who have not put on the shutter glasses 2A at the same time, the display mode control unit 51 switches the display mode to the glasses mode or the 2D display mode. The display mode control unit 51 also switches the display mode in accordance with the putting on/removal of the shutter glasses 2A by the user and the user's position. For example, when the user does not put on the shutter glasses 2A and is not in the region of normal vision in which the user can perform normal stereoscopic viewing with the naked eye, the display mode control unit 51 causes the image display unit 11 to display a two-dimensional image with no disparity and controls the disparity separation function of the variable parallax element 12A to be in the off state (2D display mode). Moreover, the display mode control unit 51 gives higher priority to the display mode which is input from the user preference input unit 54 by the user and performs switching control.

### [Operation]

### (Triggers for Switching Display Mode)

In this stereoscopic display apparatus, the display mode control unit 51 automatically switches the display mode for the operation from among the glasses mode, the glasses-free mode, and the 2D display mode. In addition, the user can manually instruct the switching of the display mode from the user preference input unit 54. The following are examples of the triggers for switching the display mode. As for the competing conditions from among the conditions shown below, the operation is performed with any one of the conditions.

### (1) Method of Using Camera Unit 52

### (1-1) Putting on of Shutter Glasses 2A

(a) Putting on/removal of the shutter glasses 2A is detected by the camera 52 (a marker, a shape, and superposition over eye pupils, and the positional relationship with nose/mouth are detected).
(b) The camera unit 52 is notified of the putting on of the shutter glasses 2A by an LED display or the like (display by the detection pattern display unit 25) of the shutter glasses 2A.

### (1-2) Size of Audience

(a) The display mode is switched to the glasses mode or the 2D display mode when a number of people, which is greater than a prescribed number, are detected in a region of normal vision with the naked eye.
(b) The display mode is switched to the glasses-free mode when everybody is in the region of normal vision with the naked eye.
(c) The display mode is switched to the glasses mode or the 2D display mode when a number of people, which is greater than a recommended number, are detected.
(d) The display mode is switched to the glasses mode or the 2D display mode when there are people who have put on the shutter glasses 2A and people who have not put on the shutter glasses 2A at the same time.
(e) The display mode is switched to the glasses-free mode or the 2D display mode when everybody does not put on the shutter glasses 2A.
(f) The display mode is shifted to the glasses-free mode or the 2D display mode when the number of the shutter glasses 2A is not enough.

### (1-3) Viewpoint Position (Visual Distance, Angle)

(a) The display mode is shifted to the glasses mode (the position is detected using the camera unit 52) or the 2D display mode when the audience is located outside the optimal visual distance.
(b) The display mode is shifted to the glasses-free mode (the position is detected using the camera unit 52) when the audience is located in the optimal visual distance.
(c) The display mode is switched to the glasses-free mode when the audience is located in the region of the normal vision.

### (2) Method of Using Signal from Shutter Glasses 2A

### (2-1) Synchronization Signal

(a) The display mode is switched to the glasses mode when the shutter synchronization is established between the shutter glasses 2A and the display unit 1.
(b) The display mode is switched to the glasses-free mode or the 2D display mode at the time of the disconnection of the shutter synchronization.

### (2-2) Power ON Signal of Shutter Glasses 2A

(a) A signal representing that the shutter glasses 2A are being used is transmitted as an infrared signal, a wireless signal, or the like from the side of the shutter glasses 2A to the side of the display mode control unit 51 (the glasses operation signal detection unit 53) after the power of the shutter glasses 2A is turned on.
(b) The power on state is detected by monitoring the display of the detection pattern display unit 25 of the shutter glasses 2A with the use of the camera unit 52.
(c) A signal representing that the shutter glasses 2A is not being used is transmitted from the side of the shutter glasses 2A (the putting-on/removal signal transmission unit 24) to the side of the display mode control unit 51 (the glasses operation signal detection unit 53) at the time of the power off of the shutter glasses 2A.

### (3) Switching in Accordance with User's Preference

### (3-1) The display mode is manually switched in accordance with the user's preference (by an operation of the remote control of the user preference input unit 54).

### (3-2) Individual Specification

(a) An individual is specified with the use of the camera unit 52 or the like, and the display mode is switched between the glasses mode and the glasses-free mode in accordance with the preference of the individual registered in advance.

### (Switching Notification)

According to this stereoscopic display apparatus, the user is notified of the switching of the display mode by the OSD unit 14 or the audio output unit of the display unit 1, or the alert display unit 26 or the audio output unit of the glasses unit 2. The examples of the switching notification are as follows.
(1) When switching of display mode is detected (regardless of whether display mode is glasses mode or glasses-free mode)
   (1-1) it is possible to select setting in which the user is not notified of the switching in accordance with the user's preference.
   (1-2) The notification is made by audio.
   (1-3) The notification is made by OSD or caption.
(2) When it is detected that the audience member who does not put on the shutter glasses 2A enters the watching area of the display unit 1 during the glasses mode
   (2-1) 2D notification is made for the user who does not put on the shutter glasses 2A (a specific area with no disparity is provided in the image display unit 11, and 2D display is performed in the specific area, for example).
(3) When a user who puts on the shutter glasses 2A for the glasses scheme is detected during the glasses-free mode
   (3-1) The user is notified of the fact that the current display mode is the glasses-free mode.
   (3-2) The user who puts on the shutter glasses 2A is notified by audio.
   (3-3) The user who puts on the shutter glasses 2A is notified by OSD or caption.
   (3-4) The display unit 1 causes the shutter glasses 2A (the alert display unit 26) of the user who puts on the shutter glasses 2A to directly display an alert through wireless communication or the like.

### (Outline of Switching Operation from Glasses-free Mode to Glasses Mode)

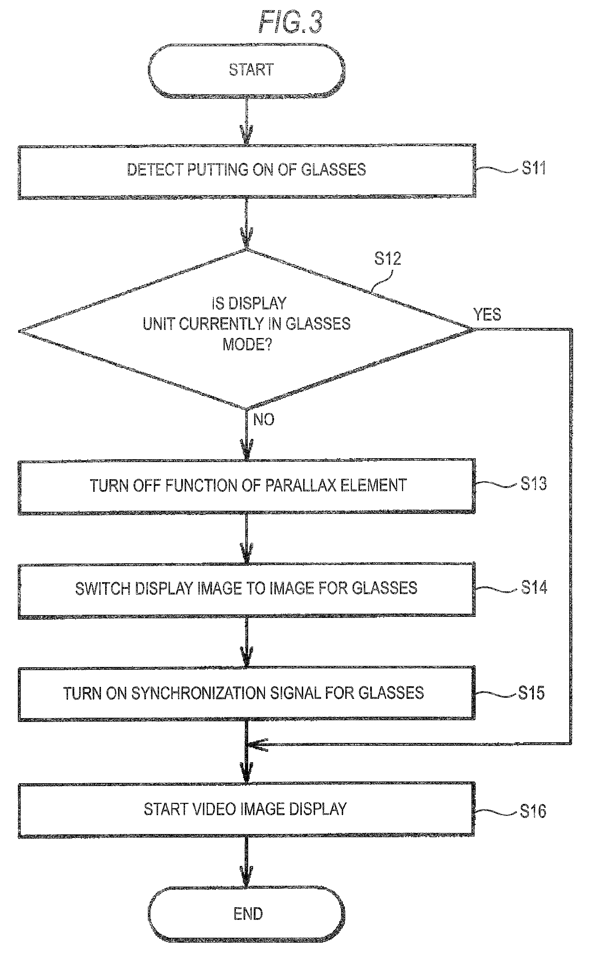

Fig. 3 shows an example of the control operation when the putting on of the shutter glasses 2A is detected. In addition, it is assumed that the size of the audience (users) is one. When the putting on of the shutter glasses 2A is detected (Step S11), the display mode control unit 51 determines whether or not the display unit 1 is currently set to the glasses mode (Step S12). In the case of the glasses mode (Step S12; Y), the image display unit 11 is caused to perform the video image display for the glasses mode as it is (Step S16). When the display mode is not set to the glasses mode (Step S12; N), the display mode control unit 51 controls the disparity separation function of the variable parallax element 12A to be in the off state (Step S13). The display mode control unit 51 also switches the display image to an image for the glasses mode (Step S14) . Specifically, the display image generation unit 4 is caused to output the disparity image data of two left and right viewpoints as display image data to the image display unit 11 in a time division manner. Next, the display mode control unit 51 controls the synchronization signal for the glasses to be in the on state (Step S15). Specifically, the display mode control unit 51 controls the synchronization signal transmission unit 15 of the display unit 1 to transmit a synchronization signal for opening and closing the shutter glasses 2A to the synchronization signal receiving unit 23 of the glasses unit 2 . Then, the image display unit 11 is caused to perform video image display for the glasses mode (Step S16).

### (Outline of Switching Operation from Glasses Mode to Glasses-free Mode)

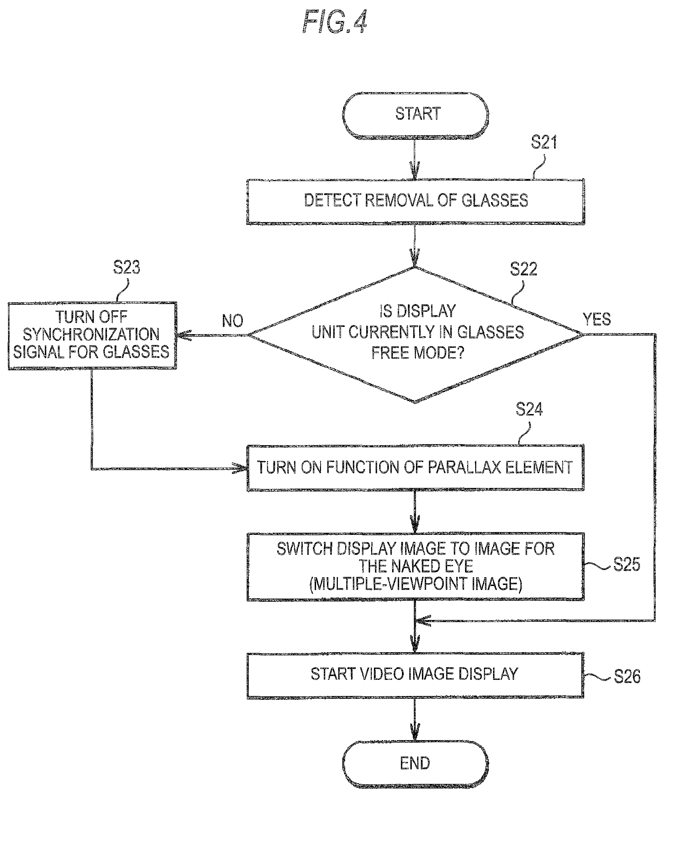

Fig. 4 shows an example of the control operation when the removal of the shutter glasses 2A is detected. In addition, it is assumed that the size of the audience (users) is one. When the removal of the shutter glasses 2A is detected (Step S21), the display mode control unit 51 determines whether or not the display unit 1 is currently set to the glasses-free mode (Step S22). In the case of the glasses-free mode (Step S22; Y), the image display unit 11 is caused to perform the video image display for the glasses-free mode as it is (Step S26). When the display mode is not set to the glasses-free mode (Step S22; N), the display mode control unit 51 controls the synchronization signal for the glasses to be in the off state (Step S23). Specifically, the synchronization signal transmission unit 15 of the display unit 1 is controlled so as not to transmit the synchronization signal for opening and closing the shutter glasses 2A. Next, the display mode control unit 51 controls the disparity separation function of the variable parallax element 12A to be in the on state (Step S24). The display mode control unit 51 also switches the display image to an image for the glasses-free mode (Step S25). Specifically, the display image generation unit 4 is caused to output disparity synthesis image data including disparity images of multiple viewpoints, which are generated by the multiple viewpoint image generation unit 43, for example, as the display image data to the image display unit 11. Then, the image display unit 11 is caused to perform video image display for the glasses-free mode (Step S26).

### (Switching Operation between Glasses Mode and Glasses-free Mode When Size of audience Is One)

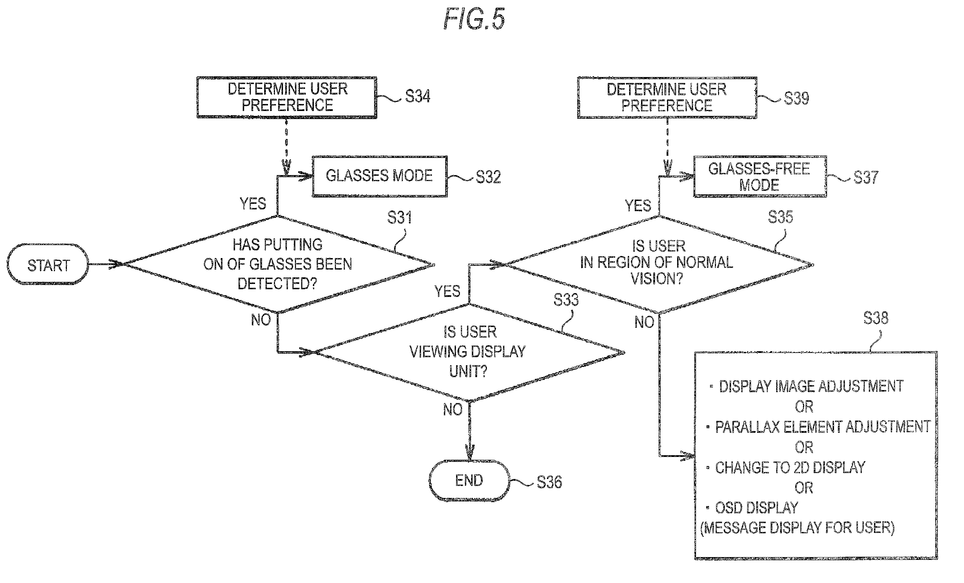

Fig. 5 shows an example of the control operation when the switching control between the glasses mode and the glasses-free mode is performed in accordance with the putting on/removal of the shutter glasses 2A by the user and the watching position (viewpoint position) of the user in the case of one user. When the putting on of the shutter glasses 2A is detected (Step S31; Y), the display mode control unit 51 performs switching control to the glasses mode. However, when there is an input from the user preference input unit 54 (Step S34), the display mode control unit 51 gives higher priority to the selection of the display mode by the input and performs the switching control.

When the putting on of the shutter glasses 2A is not detected (Step S31; N), it is determined whether or not the user is viewing the display unit 1 (Step S33). This determination can be made by analyzing whether or not the user's viewpoint position directs the display unit 1 by the camera unit 52. When the user is not viewing the display unit 1 (Step S33; N), the switching operation is completed (Step S36). When the user is viewing the display unit 1 (Step 533; Y), determination is made regarding whether or not the user is in the region of the normal vision in which normal stereoscopic viewing can be made (Step S35). When the user is in the region of normal vision (Step S35; Y), switching control to the glasses-free mode is performed. However, when there is an input from the user preference input unit 54 (Step S39), the switching control is performed so as to give higher priority to the selection of the display mode by the input.

When the user is not in the region of normal vision (Step S35; N), control is performed so as to adjust the display image data to be displayed on the image display unit 11 in order that the stereoscopic viewing with the naked eye can be normally performed at the current viewpoint position (Step S38) . Alternatively, the variable parallax element 12A is adjusted in order that the stereoscopic viewing with the naked eye can be normally performed. When the variable parallax element 12A is a variable parallax barrier, control is performed so as to adjust the barrier pattern. Control may be made so as to change the display mode to the 2D display mode when the adjustment in order that the stereoscopic viewing with the naked eye can be normally performed is difficult. In addition, the user may be notified of the fact that the user is not in the region of normal vision by the OSD unit 14, or a message for encouraging the user to move into the region of normal vision may be sent to the user.

### (Switching Operation between Glasses Mode and Glasses-free Mode When Size of audience Is Two or More)

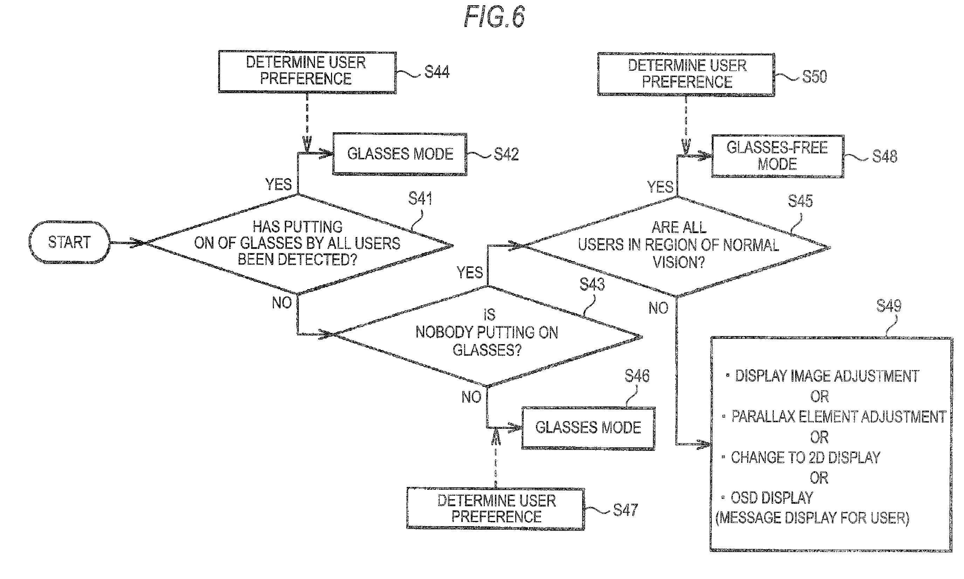

Fig. 6 shows an example of the control operation when the switching control between the glasses mode and the glasses-free mode is performed in accordance with the putting on/removal of the shutter glasses 2A by the user and the watching position (viewpoint position) of the user in the case of two or more users. When it is detected that all users have put on the shutter glasses 2A (Step S41; Y), the display mode control unit 51 performs switching control to the glasses mode. However, when there is an input from the user preference input unit 54 (Step S44), the display mode control unit 51 gives higher priority to the selection of the display mode by the input and performs the switching control.

When there are users who have not put own the shutter glasses 2A (Step S41; N), it is determined whether or not all users have not put on the shutter glasses 2A (Step S43). When there are users who have put on the shutter glasses 2A and users who have not put on the shutter glasses 2A at the same time (Step S43: N), the switching control is performed to the glasses mode. However, when there is an input from the user preference input unit 54 (Step S47), the switching control is performed so as to give higher priority to the selection of the display mode by the input.

When all users have not put on the shutter glasses 2A (Step S43; Y), it is determined whether or not all users are in the region of normal vision in which stereoscopic viewing with the naked eye can be normally performed (Step S45). When all users are in the region of normal vision (Step 545; Y), the switching control is performed to the glasses-free mode. However, when there is an input from the user preference input unit 54 (Step S50), the switching control is performed so as to give higher priority to the selection of the display mode by the input.

When there are users who are not in the region of normal vision (Step S45; N), control is performed so as to adjust the display image data to be displayed on the image display unit 11 in order that all users can normally perform stereoscopic viewing with the naked eye at the current viewpoint positions (Step S49). Alternatively, the variable parallax element 12A is adjusted in order that all users can normally perform stereoscopic viewing with the naked eye. When the variable parallax element 12A is a variable parallax barrier, control is performed so as to adjust the barrier pattern. Control may be made so as to change the display mode to the 2D display mode when the adjustment in order that all users can normally perform the stereoscopic viewing with the naked eye is difficult. In addition, the users may be notified of the fact that the users are not in the region of normal vision by the OSD unit 14, or a message for encouraging the users to move into the region of normal vision may be sent to the users.

### [Advantages]

As described above, it is possible to easily switch between a plurality of stereoscopic display modes since the stereoscopic display apparatus according to the embodiments automatically switches the display mode between the glasses mode and the glasses-free mode for the stereoscopic display in accordance with the putting on of the stereoscopic glasses by the user, the size of audience, and the like. In addition, it is possible to select a display mode in accordance with the user's preference at arbitrary timing since the user can manually instruct the switching of the display mode by the user preference input unit 54. Accordingly, it is possible to provide stereoscopic display suitable for TPO such as a user's preference, a watching environment, and the like. For example, it is possible to select the glasses method when the user desires to give priority to the sense of depth for the stereoscopic display since the sense of depth can be felt more easily in the glasses scheme than in the glasses-free scheme. In addition, the degree of freedom in the watching position becomes higher. For example, it is possible to select the glasses scheme when the user desires to give priority to the degree of freedom in the watching position for the stereoscopic display since the watching position is less limited in the glasses scheme. Moreover, it is possible to easily switch the display mode such that the stereoscopic display based on the glasses-free scheme is performed for a low number of users while the stereoscopic display based on the glasses scheme is performed for a large number of users.

### <Other Embodiments>

The present disclosure is not limited to the description of the above embodiments, and various modifications can be made.

For example, although the example in which the stereoscopic glasses used in the glasses mode is the shutter glasses 2A was described in the above embodiment, a polarization glasses may be made as the stereoscopic glasses.

Thus according to some embodiments there is described a method of displaying images, the method comprising: switching between displaying images in a first stereoscopic display mode in which images are displayed to be viewed with stereoscopic viewing glasses and a second stereoscopic display mode in which images are displayed to be viewed without stereoscopic viewing glasses.

In accordance with some embodiments the parallax element is controlled to be in an on state in the second stereoscopic display mode and is controlled to be in an off state in the first stereoscopic display mode.

In accordance with some embodiments the method further comprises detecting whether a viewer is wearing stereoscopic viewing glasses.

In accordance with some embodiments the switching is performed based on whether the viewer is detected to be wearing stereoscopic viewing glasses.

In accordance with some embodiments the method further comprises receiving user input indicating a user's selection of the first display mode or the second display mode, and wherein the switching is performed based on the user's selection.

In accordance with some embodiments the method further comprises: receiving an image of a viewing region; and processing the image, wherein the switching is performed based on a result of processing the image.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present disclosure contains subject matter related to that disclosed in Japanese Priority Patent Application JP 2010-260073 filed in the Japan Patent Office on November 22, 2010, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A stereoscopic display apparatus, comprising:
a display mode control unit configured to switch the display unit between a first stereoscopic display mode configured for a viewer to view images with stereoscopic viewing glasses and a second stereoscopic display mode configured for a viewer to view images without stereoscopic viewing glasses.

2. The stereoscopic display apparatus of claim 1, further comprising a display unit.

3. The stereoscopic display apparatus of claim 2, further comprising a parallax element.

4. The stereoscopic display apparatus of claim 3, wherein the parallax element comprises a parallax barrier or a lenticular lens.

5. The stereoscopic display apparatus of claim 3, further comprising a parallax element control unit.

6. The stereoscopic display apparatus of claim 5, wherein the parallax element control unit controls the parallax element in response to an instruction from the display mode control unit.

7. The stereoscopic display apparatus of claim 6, wherein the parallax element is controlled to be in an on state in the second stereoscopic display mode and is controlled to be in an off state in the first stereoscopic display mode.

8. The stereoscopic display apparatus of claim 1, further comprising:
a glasses operation signal detection unit.

9. The stereoscopic display apparatus of claim 8, wherein the display mode control unit switches the display unit into the first stereoscopic display mode based on a signal from the glasses operation signal detection unit indicating that a viewer is wearing stereoscopic viewing glasses.

10. The stereoscopic display apparatus of claim 8, wherein the display mode control unit switches the display unit into the second stereoscopic display mode based on a signal from the glasses operation signal detection unit indicating that a viewer is not wearing stereoscopic viewing glasses.

11. The stereoscopic display apparatus of claim 1, further comprising a camera unit.

12. The stereoscopic display apparatus of claim 11, wherein the display mode control unit switches the display unit between the first stereoscopic display mode and the second stereoscopic display mode based on information from the camera unit.

13. The stereoscopic display apparatus of claim 1, further comprising a user preference input unit configured to receive a user's selection of the first mode or the second mode, wherein the display unit is switched between the first stereoscopic display mode and second stereoscopic display mode based on the user's selection.

14. A method of displaying images, the method comprising:
switching between displaying images in a first stereoscopic display mode in which images are displayed to be viewed with stereoscopic viewing glasses and a second stereoscopic display mode in which images are displayed to be viewed without stereoscopic viewing glasses.

15. The method of claim 14, further comprising:
controlling a parallax element in accordance with the first stereoscopic display mode or the second stereoscopic display mode.
